# EUROPEAN PATENT APPLICATION

(11) **EP 4 678 527 A1**
(43) Date of publication of application: **14.01.2026**
(21) Application number: 23866665.5
(22) Date of filing: 08.05.2023
(51) Int. Cl.: B62M 11/04, B62M 6/50, B62M 6/55

(54) **MULTI-STAGE TRANSMISSION STRUCTURE, POWER DEVICE AND ELECTRIC BICYCLE**

(30) Priority: 09.03.2023 CN 202310254949
(71) Applicant: ZW Drive GmbH, 87616 Marktoberdorf (DE); Shenzhen Zhaowei Machinery & Electronics Co., Ltd., Shenzhen, Guangdong 518000 (CN)
(72) Inventor: XU, Shangxiang, Shenzhen, Guangdong 518000 (CN); LI, Ping, Shenzhen, Guangdong 518000 (CN); WANG, Junheng, Shenzhen, Guangdong 518000 (CN)
(74) Representative: dompatent
(86) International application number: PCT/CN2023/092811
(87) International publication number: WO 2024/183149

(57) **Abstract**

The present application provides a multi-stage transmission structure, which includes: a pedal shaft (100), a multi-stage gear group (200), and a first unidirectional device (241) and a second unidirectional device (242) that are coaxially arranged; a plastic shaft sleeve (223) is sleeved between the two gears coaxially arranged on a part of the input gear group (210), the output gear group (230) and the intermediate gear group (220) in the multi-stage gear group (200), and the gear shaft of the output gear group (230) in the multi-stage gear group (200) is sleeved on an outer side of the pedal shaft (100); the second unidirectional device (242) is connected to the gear shaft of the output gear group (230) and the pedal shaft (100), and the first unidirectional device (241) is arranged between the gear shaft of the output gear group (230) and the gear; the shafts mounted in the first unidirectional device (241) and the second unidirectional device (242) are allowed to rotate in opposite directions, and the first unidirectional device (241) is an unidirectional wedge bearing. The multi-stage transmission structure provided in the present application is easy to assemble, the wear is slow and the weight is light. The present application further provides a power device and an electric bicycle.

## Description

The present application claims priority of a Chinese patent application, with Application No. 202310254949.3, filed on March 9, 2023 to CNIPA, and entitled "multi-stage transmission structure, power device and electric bicycle"; the whole content of which is incorporated herein by reference.

### TECHNICAL FIELD

The present application relates to the technical field of motors, and more particularly to a multi-stage transmission structure, a power device, and an electric bicycle.

### BACKGROUND

The power device of the existing electric bicycle includes a motor, a multi-stage transmission structure, and two unidirectional devices, the unidirectional devices are generally unidirectional needle roller bearings. One of the unidirectional devices is arranged between the pedal shaft and the multi-stage transmission structure. When the pedal shaft is reversed, the unidirectional device is used to prevent the pedal shaft from driving the multi-stage transmission structure and causing structural damage. The other unidirectional device is limited by size and can only be arranged in a multi-stage transmission structure, in manual trampling mode, the unidirectional device is used to prevent the pedal shaft from transferring torque to the multi-stage transmission structure and/or the drive shaft of the motor, which can cause the gears in the multi-stage transmission structure to become stuck or the motor to be damaged.

Due to the location of the above-mentioned unidirectional devices, the assembly and later maintenance of the multi-stage transmission structure are inconvenient, and the wear of the multi-stage transmission structure is also faster.

### TECHNICAL PROBLEM

An object of embodiments of the present application is to provide a multi-stage transmission structure, a power device, and an electric bicycle, so as to solve the technical problems existing in the prior art that the multi-stage transmission structure is inconvenient to assemble, the wear is fast and the weight is large.

### SUMMARY

In order to achieve above object, the technical solution adopted in an embodiment of a first aspect of the present application is to provide a multi-stage transmission structure, which includes:
a pedal shaft;
a multi-stage gear group, comprising an input gear group connected with a drive shaft of a motor, an output gear group connected with the pedal shaft, and an intermediate gear group arranged between the input gear group and the output gear group; each of the input gear group, the output gear group and the intermediate gear group comprises a gear shaft and at least one gear arranged on the gear shaft; the gear shaft of the output gear group is sleeved on an outer side of the pedal shaft; a part of the input gear group, the output gear group and the intermediate gear group is provided with two gears spaced apart on the gear shaft along an axial direction of the gear shaft, and a plastic shaft sleeve is sleeved between the two gears and located on the gear shaft; and
a first unidirectional device and a second unidirectional device that are coaxially arranged, the second unidirectional device being connected between the gear shaft of the output gear group and the pedal shaft, the first unidirectional device being arranged between the gear shaft of the output gear group and the gear; the first unidirectional device and the second unidirectional device are unidirectional bearings, and the first unidirectional device is an unidirectional wedge bearing;
a relative rotation direction between the gear shaft and the gear on the output gear group is a first direction, a relative rotation direction between the gear shaft of the output gear group and the pedal shaft is a second direction, and the first direction is opposite to the second direction.

Optionally, the metal connection member is integrally formed on the gear shaft.

Optionally, the gears engaged with the adjacent gear groups on each of the input gear group, the output gear group and the intermediate gear group are helical gears.

Optionally, the multi-stage transmission structure further includes a casing, the multi-stage gear group is arranged inside the casing, and the pedal shaft penetrates through two opposite sides of the casing; part of the gear shaft is rotationally arranged inside the casing through a bearing, the bearing arranged at an end of the gear shaft is abutted against an inner side wall of the casing, and an elastic member is provided between the bearing arranged at an other end of the gear shaft and an inner wall of the casing.

In an embodiment of a second aspect of the present application, a power device is provided, which includes the multi-stage transmission structure mentioned above, a motor and a control module that are arranged inside a casing; wherein a torque sensor is arranged on a pedal shaft, and the torque sensor is electrically connected with the control module; an angle sensing mechanism is arranged between an interior of the casing and a drive shaft, and the angle sensing mechanism is electrically connected with the control module.

Optionally, a baffle is detachably arranged inside the casing and located between the motor and the multi-stage transmission structure.

Optionally, the baffle is provided with a support member, and the angle sensing mechanism comprises a magnetic steel body arranged on one end of the drive shaft and a magnetic encoder arranged on the support member and facing one end of the drive shaft.

Optionally, the support member is an arc baffle arranged around the drive shaft, and an axial height of the arc baffle is greater than or equal to an axial height of a gear engaged with the drive shaft.

Optionally, a mounting cavity is formed in the casing, and a sealing cover is arranged at an opening of the mounting cavity; the motor is arranged in the mounting cavity, and a seal is filled between an end surface of the motor and a bottom of the mounting cavity, as well as between an other end surface of the motor and the sealing cover.

Optionally, the control module is arranged between the motor and the multi-stage transmission structure, and electronic components on the control module are arranged on a side of the control module away from the multi-stage transmission structure.

Optionally, the motor includes a rotor module and a stator module, and the rotor module is rotationally arranged in a rotating cavity of the stator module; the stator module comprises a plurality of winding blocks arranged around an array in a circumferential direction.

Optionally, gaps between each of side walls on both sides of an axis on the rotor module and opposite inner walls of rotating cavity are uneven.

Optionally, magnetic steels in the rotor module are arranged in an array along a circumference direction of an iron core, and the magnetic steels are arranged along a radial direction; a hollow portion is arranged in the iron core and located between adjacent two magnetic steels, to form a magnetic insulation bridge between the two magnetic steels; and a groove extended along a height direction of the iron core is formed on an outer circumferential surface of the iron core and located at a same radial position as the magnetic steels.

In an embodiment of a third aspect of the present application, an electric bicycle is provided, which includes: a vehicle body and the power device mentioned above; a crank of the vehicle body is connected with the pedal shaft in the power device, and a chainset of the vehicle body is fixedly connected with the pedal shaft.

### BENEFICIAL EFFECTS

The multi-stage transmission structure, the power device and the electric bicycle provided by the embodiments of the present application have at least the following beneficial effects:
Firstly, by providing the two unidirectional devices coaxially arranged, the assembly of the multi-stage transmission structure can be simplified, and the reversing of a part of gears in the multi-stage transmission structure can be avoided when the pedal shaft is reversed, so as to reduce the wear of the multi-stage transmission structure. Secondly, the plastic shaft sleeve is sleeved between the two gears coaxially arranged on a part of the input gear group, the output gear group and the intermediate gear group, which can reduce the thickness of the gears under the condition of axial positions of the two gears are stability, so as to achieve the purpose of weight reduction and achieve the lightweight of the multi-stage transmission structure.

### BRIEF DESCRIPTION OF THE DRAWINGS

In order to explain the embodiments of the present application more clearly, a brief introduction regarding the accompanying drawings that need to be used for describing the embodiments of the present application or the prior art is given below; it is obvious that the accompanying drawings described as follows are only some embodiments of the present application, for those skilled in the art, other drawings can also be obtained according to the current drawings on the premise of paying no creative labor.
FIG. 1 is a perspective view of a multi-stage transmission structure in some embodiments of the present application;
FIG. 2 is a partial sectional view of a multi-stage transmission structure in some embodiments of the present application;
FIG. 3 is a top view of a multi-stage transmission structure in some embodiments of the present application;
FIG. 4 is an explosion view of an intermediate gear group in some embodiments of the present application;
FIG. 5 is an explosion view of an input gear group in some embodiments of the present application;
FIG. 6 is a sectional view of an input gear group in some embodiments of the present application;
FIG. 7 is an explosion view of a power device in some embodiments of the present application;
FIG. 8 is a perspective view of a power device after a casing is hidden in some embodiments of the present application;
FIG. 9 is a perspective view of a power device after a casing and part of the baffle are shell in some embodiments of the present application;
FIG. 10 is a side view of a power device after a casing is hidden in some embodiments of the present application;
FIG. 11 is an explosion view of a power device after a casing is hidden in some embodiments of the present application;
FIG. 12 is a sectional view showing a specific position relationship between a sealing cover and a casing relative to a motor in some embodiments of the present application;
FIG. 13 is a top view of a rotor module in some embodiments of the present application;
FIG. 14 is a top view of a stator module after winding in some embodiments of the present application; and

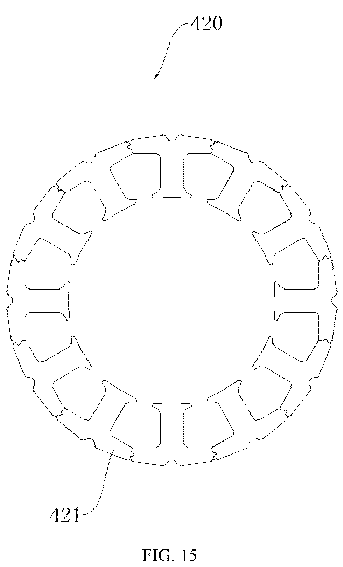

FIG. 15 is a top view of a stator module before winding in some embodiments of the present application.

In the drawings, the reference signs are listed:
100-pedal shaft;
200-multi-stage gear group;
210-input gear group; 211-first gear; 212-second gear; 213-metal connection member;
220-intermediate gear group; 221-third gear; 222-fourth gear; 223-plastic shaft sleeve;
230-output gear group; 231-fifth gear; 232-output gear shaft;
241-first unidirectional device; 242-second unidirectional device;
250-elastic member;
300-casing; 310- mounting cavity;
400-motor;
410-rotor module; 411-magnetic steel; 412-iron core; 4121-hollow portion; 4122-groove;
420-stator module; 421-winding block;
430-drive shaft;
500-control module;
600,-torque sensor;
710-magnetic encoder; 720-magnetic steel body;
800-baffle;
810-baffle assembly; 811-baffle disc; 820-support member; 830-sealing cover; 831-annular flange.

### DETAILED DESCRIPTION OF EMBODIMENTS

In order to make the purpose, the technical solution and the advantages of the present application be clearer and more understandable, the present application will be further described in detail below with reference to accompanying figures and embodiments.

It should be understood that the specific embodiments described herein are merely intended to illustrate but not to limit the present application.

It is noted that when a component is referred to as being "fixed to" or "disposed on" another component, it can be directly or indirectly on another component.

When a component is referred to as being "connected to" another component, it can be directly or indirectly connected to another component.

It needs to be understood that, directions or location relationships indicated by terms such as "length", "width", "up", "down", "front", "rear", "left", "right", "vertical", "horizontal", "top", "bottom", "inside", "outside", and so on are the directions or location relationships shown in the accompanying figures, which are only intended to describe the present application conveniently and simplify the description, but not to indicate or imply that an indicated device or component must have specific locations or be constructed and manipulated according to specific locations; therefore, these terms shouldn't be considered as any limitation to the present application.

In addition, terms "the first" and "the second" are only used in describe purposes, and should not be considered as indicating or implying any relative importance, or impliedly indicating the number of indicated technical features. As such, technical feature(s) restricted by "the first" or "the second" can explicitly or impliedly comprise one or more such technical feature(s).

In the description of the present application, "a plurality of" means two or more, unless there is additional explicit and specific limitation.

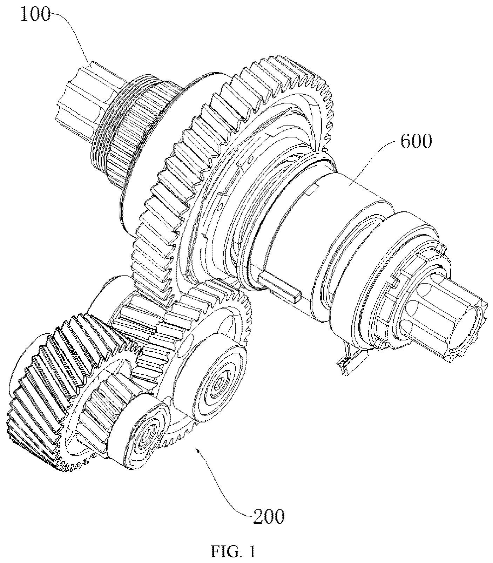

As shown in FIGS. 1 to 6, the multi-stage transmission structure provided in the embodiment of the first aspect of the present application is described.

As shown in FIGS. 1 to 3, the multi-stage transmission structure described in the present application includes a pedal shaft 100, a multi-stage gear group 200, and a first unidirectional device 241 and a second unidirectional device 242 coaxially arranged.

Specifically, both ends of the pedal shaft 100 are connected with pedals, and the pedal shaft 100 is connected with a chainset, the chainset is connected with a rear wheel chainset of the electric bicycle through a chain transmission, and the pedal shaft 100 rotates to drive the rear wheel to rotate.

The multi-stage gear group 200 includes an input gear group 210 connected to the drive shaft 430 of the motor 400, an output gear group 230 connected to the pedal shaft 100, and an intermediate gear group 220 arranged between the input gear group 210 and the output gear group 230.

It should be understood that, as shown in FIGS. 1 to 3, in the embodiment of the present application, the multi-stage gear group 200 is taken as an example of a three-stage transmission.

The input gear group 210 includes two gears coaxially arranged and synchronously rotated (i.e. the first gear 211 and the second gear 212), the first gear 211 is engaged with the tooth profile on the drive shaft 430 of the motor 400, and the second gear 212 is engaged with the intermediate gear group 220.

The intermediate gear group 220 is arranged between the input gear group 210 and the output gear group 230 and includes two gears coaxially arranged and synchronously rotated (i.e., the third gear 221 and the fourth gear 222). The third gear 221 is engaged with the second gear 212 of the input gear group 210, and the fourth gear 222 is engaged with the output gear group 230.

The output gear group 230 includes an output gear shaft 232 sleeved on the outer side of the pedal shaft 100 and a gear (i.e., the fifth gear 231) sleeved on the output gear shaft 232. The fifth gear 231 is engaged with the fourth gear 222 of the intermediate gear group 220.

A second unidirectional device 242 is connected between the output gear shaft 232 and the pedal shaft 100; the first unidirectional device 241 is arranged between the output gear shaft 232 and the fifth gear 231; and the first unidirectional device 241 and the second unidirectional device 242 are coaxially arranged.

The first unidirectional device 241 and the second unidirectional device 242 allow to rotate in opposite directions. In other words, the relative rotation direction between the output gear shaft 232 and the fifth gear 231 is the first direction, and the relative rotation direction between the output gear shaft 232 and the pedal shaft 100 is the second direction, and the first direction and the second direction are opposite to each other.

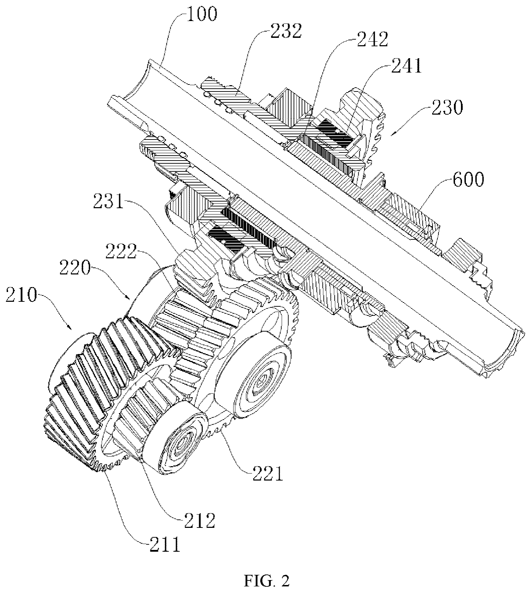

As shown in FIG. 2, the first unidirectional device 241 is used to prevent the output gear shaft 232 from rotating counterclockwise with respect to the fifth gear 231; and the second unidirectional device 242 is used to prevent the pedal shaft 100 from rotating clockwise with respect to the output gear shaft 232.

Thus, in the manual trampling mode, since the rotation directions allowed by the first unidirectional device 241 and the second unidirectional device 242 are opposite to each other, when the pedal shaft 100 is rotated forward, the output gear shaft 232 is driven to rotate forward; when the pedal shaft 100 is rotated reversely, due to the limitation of the rotation direction allowed by the second unidirectional device 242, the pedal shaft 100 will not drive the output gear shaft 232 to reverse rotation when the pedal shaft 100 is rotated reversely. so as to avoid problems such as clamping caused by the reverse rotation of each gear.

In the drive mode of the motor 400, the fifth gear 231 rotates forward under the driven of the motor 400. Since the first unidirectional device 241 is used to prevent the output gear shaft 232 from rotating counterclockwise relative to the fifth gear 231, the output gear shaft 232 rotates forward driven by the fifth gear 231; and the torque is transferred to the pedal shaft 100, so as to play an auxiliary role in driving the pedal shaft 100 to rotate.

As shown in FIG. 2, in some embodiments, the first unidirectional device 241 is a unidirectional wedge bearing, the second unidirectional device 242 is a unidirectional needle roller bearing, and the unidirectional wedge bearing and the unidirectional needle roller bearing are coaxially arranged.

Thus, by providing the first unidirectional device 241 as the unidirectional wedge bearing, the problem that the unidirectional needle roller bearing cannot be set between pedal shaft 100 and output gear shaft 232 due to its small size can be overcome, so that the first unidirectional device 241 and the second unidirectional device 242 can be coaxially arranged, so as to facilitate the assembly of the unidirectional devices and subsequent use and maintenance.

At the same time, compared to the setting method of providing one of the unidirectional devices in a multi-stage transmission structure in related technologies, the present application has the following beneficial effects:
On the one hand, it can prevent the wear problem caused by the reverse rotation of each gear and mutual clamping, so as to extend the service life of the multi-stage transmission structure, and also enable the pedal shaft 100 to smoothly reverse rotation when the user reverses the pedal shaft 100;
On the other hand, the torque of pedal shaft 100 in manual trampling mode will not be transferred to the multi-stage transmission structure, and each gear in the multi-stage transmission structure will not reverse, so that there will be no reverse resistance, which can reduce the riding resistance in manual trampling mode, thus the use experience of the electric bicycle is improved.

It can be understood that most of the gears in the multi-stage transmission structure in related technologies are metal gears, and the thickness of the gears on each gear group is relatively thick in order to make the gears on the adjacent two gear groups to be stably engaged. At the same time, in order to facilitate assembly, the end surfaces of the two gears which are coaxially arranged on part of the gear group are abutted against each other. As a result, the thickness of the gears on the gear group is larger, which not only leads to the weight of the multi-stage transmission structure, but also increases the production cost of the multi-stage transmission structure.

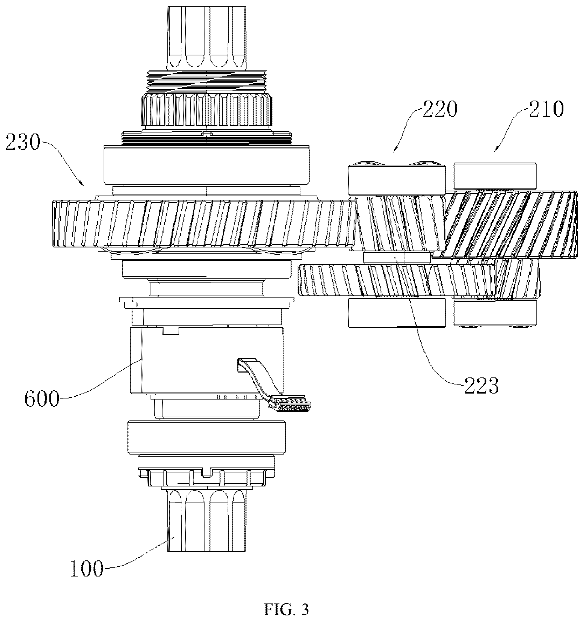

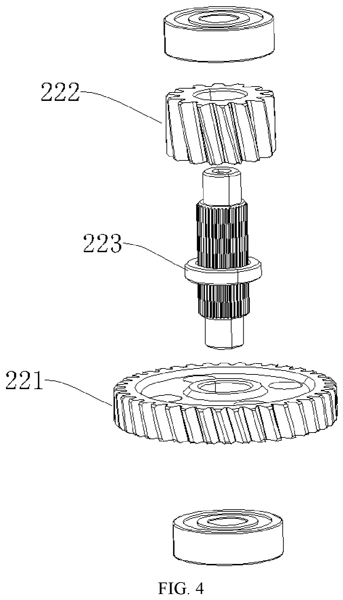

For this purpose, as shown in FIGS. 3 and 4, in the present embodiment, a part of the gear group (for example, the intermediate gear group 220 in the present embodiment) includes two gears (i.e., the third gear group 221 and the fourth gear group 222) coaxial and spaced along the axis of the gear shaft, and in the gear group, a plastic shaft sleeve 223 is sleeved on the gear shaft and located between the third gear 221 and the fourth gear 222.

The plastic shaft sleeve 223 is used to separate the third gear 221 and the fourth gear 222, so as to effectively reduce the thickness of the third gear 221 and the fourth gear 222 on the premise of meeting the stable meshing with the adjacent gear groups, so as to reduce the weight of the gear and reduce the production cost of the gear. Further, while the weight of the gear is reduced, the moment of inertia of the gear can also be reduced, thus making the deceleration transmission of the multi-stage transmission structure more accurate.

As shown in FIGS. 3, 5, and 6, in some embodiments, some gears in part of the input gear group, the output gear group and the intermediate gear group are plastic gears. Specifically, in the embodiment, the first gear 211 on the input gear group 210 is a plastic gear.

Since the first gear 211 is engaged with the tooth profile on the drive shaft 430 of the motor 400, and the drive shaft 430 of the motor 400 has a very high speed, the speed of the first gear 211 is also high. If the first gear 211 is made of metal material, the larger volume will lead to the larger mass of the first gear 211, and the larger mass will significantly increase the moment of inertia of the first gear 211, and the larger moment of inertia will significantly cause the loss of transferred energy.

Therefore, in the embodiment, the first gear 211 is provided as a plastic gear, which can effectively reduce the mass of the first gear 211, and then reduce the moment of inertia of the first gear 211, and finally achieve the purpose of reducing the loss of transferred energy, so as to achieve high efficiency transmission.

Further, it should be understood that the input gear group 210 has a higher speed and is also responsible for torque transmission. In the case that the first gear 211 is the plastic gear, the large contact stress between the first gear 211 and the drive shaft 430 of the motor 400 will make it easy to slip between the first gear 211 and the gear shaft, thus affecting the transmission accuracy.

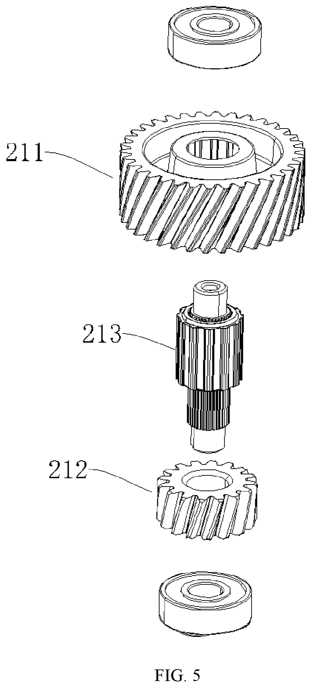

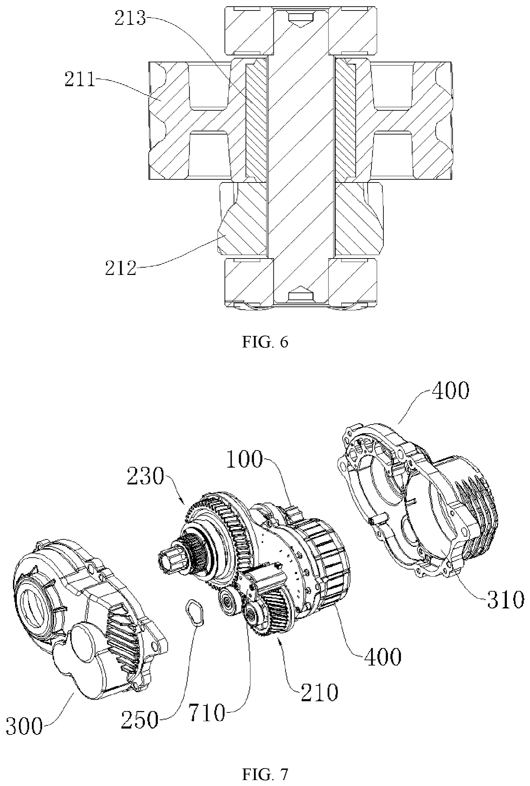

For this purpose, as shown in FIGS. 5 and 6, in the embodiments of the present application, a metal connection member 213 is provided on the gear shaft, the metal connection member 213 is fixedly connected to the gear shaft, and the plastic gear sleeve engaged with the adjacent gear groups is sleeved on the outer side of the metal connection member 213. That is, specifically, in the embodiment of the present application, the metal connection member 213 is arranged between the first gear 211 and the gear shaft.

By providing the metal connection member 213 between the first gear 211 and the gear shaft, the contact area between the first gear 211 and the gear shaft can be increased, thus increasing the friction between the first gear 211 and the gear shaft, so that the first gear 211 and the gear shaft can maintain a stable connection state under high speed conditions, so as to effectively ensure the transmission accuracy.

Further, in order to improve the stability of the connection between the metal connection member 213 and the first gear 211, a reinforcing structure is arranged on the outer surface of the metal connection member 213, and the reinforcing structure protrudes or recessed into the surface of the metal connection member 213. In this way, the contact area between the metal connection member 213 and the first gear 211 is larger and the connection between the two is more stable.

Specifically, the reinforcing structure can be a reinforcing rib structure extending in the thickness direction on the surface of the metal connection member 213, or the reinforcing structure can be a convex block formed in an array on the surface of the metal connection member 213, or the reinforcing structure can be a groove 4122 molded on the surface of the metal connection member 213.

In some specific embodiments, the metal connection member 213 is a metal gear. In this way, when the metal connection member 213 is processed and formed, the casting mold of the gear can be directly cast and formed, which can save the processing cost.

Further, in each of the preceding embodiments provided with the metal connection member 213, the metal connection member 213 is integrally formed on the gear shaft, and the first gear 211 is integrally formed on the metal connection member 213.

Specifically, the manufacturing steps of the input gear group 210 are as follows:
In a first step, fitting the second gear 212 and the gear shaft in an interference fit, to form a first semi-finished product after the second gear 212 and the gear shaft are fixedly connected;
In a second step, forming a metal connection member 213 on the first semi-finished product fixedly connected as a whole and located at an axial mounting position of the first gear 211; the forming method of the metal connection member 213 can be mold casting forming; specifically, a casting mold is sleeved at the axial assembly position of the first gear 211 on the first semi-finished product, and the metal connection member 213 is formed on the gear shaft of the first semi-finished product by the metal forming method of powder metallurgy, to form a second semi-finished product;
In a third step, placing the second semi-finished product on an injection mold, and injecting to form the first gear 211 on the metal connection member 213 by injection molding process, so as to complete the processing and assembly of the input gear group 210.

As shown in FIGS. 1 to 3 and 7, in some embodiments, the gears engaged with adjacent gears in each gear group are helical gears. By providing the gears in the multi-stage transmission structure to helical gear, such that:
On the one hand, the bearine capacity of each single gear can be improved, so as to reduce the volume of each gear under load conditions to achieve the purpose of lightweight;
On the other hand, by providing the gear as a helical gear, the noise of the meshing transmission of each gear can be reduced;
On the other hand, the helical gear drive is smooth and can maintain stable meshing under high speed conditions, thus the smoothness of the meshing drive is improved.

It can be understood that due to the use of helical gear, when the helical gear rotates at high speed, it will produce axial force biased to one side of the gear shaft, causing the gear group where the helical gear is located to move axially, thus affecting the smoothness and transmission accuracy of the transmission.

For this purpose, as shown in FIG. 7, in some embodiments, the multi-stage transmission structure also includes a casing 300; the multi-stage gear group 200 is arranged inside the casing 300, and the pedal shaft 100 is penetrated through the opposite sides of the casing 300; part of the gear shaft is rotationally arranged inside the casing 300 through the bearing, one end of the bearing is abutted against the inner wall of the casing 300, the bearing at one end of the gear shaft is abutted against the inner wall of the casing 300, and the bearing at the other end of the gear shaft is equipped with an elastic member 250 between the bearing and the inner wall of the casing 300.

It should be understood that the elastic member 250 is arranged at the end of the gear shaft in the opposite direction of the axial force generated by the helical gear, that is, the axial compression force of the elastic member 250 on the gear shaft is in the same direction as the axial force generated by the helical gear.

By providing the elastic member 250, after the assembly of the multi-stage transmission structure is completed, the bearing at the other end of the gear shaft firmly squeezes the inner wall of the casing 300 under the elastic force of the elastic member 250. When the helical gear rotates to generate the axial force, the gear shaft has firmly squeezes the inner wall of the casing 300 under the elastic force of the elastic member 250, the gear shaft no longer moves in the axial direction, which can improve the smoothness and transmission accuracy of the transmission.

As shown in FIG. 7, it is understood in some embodiments, the aforementioned elastic member 250 is a corrugated washer. In this way, the elastic 250 is easy to assemble.

As shown in FIGS. 7 to 13, in the second aspect of the present application, a power device is provided, which includes a multi-stage transmission structure in each of the above-mentioned embodiments, a motor 400, and a control module 500 located inside the casing 300.

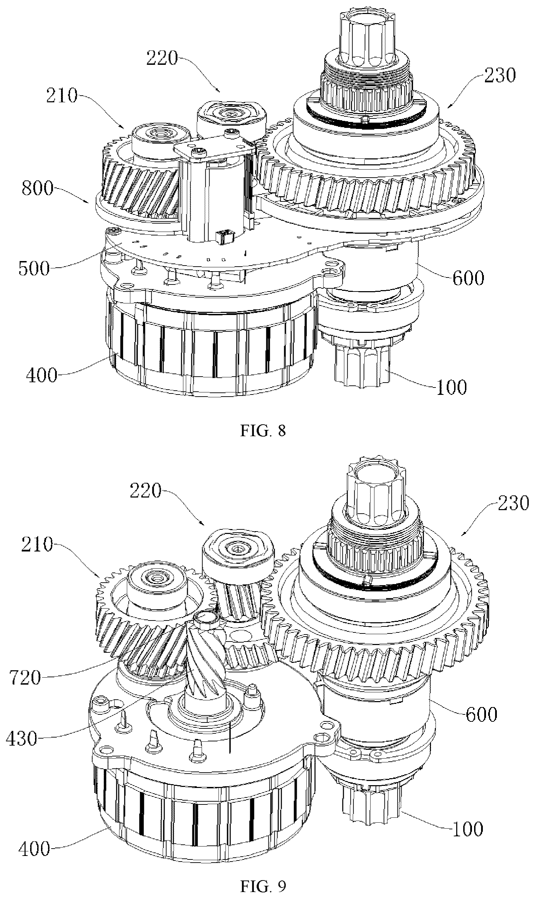

As shown in FIG. 9, it should be understood that the drive shaft 430 of the motor 400 is provided with a tooth profile integrally formed, and the first gear 211 in the multi-stage transmission structure engages with the tooth shape on the drive shaft 430 of the motor 400. In this way, the outer side of the drive shaft 430 of the motor 400 does not need to provide a tooth profile engaged with the first gear 211, which simplifies the mounting step of the drive shaft 430 and saves the processing cost, and also ensures the structural strength of the tooth profile on the drive shaft 430.

As shown in FIGS. 1 to 3 and 8 to 10, a torque sensor 600 electrically connected to the control module 500 is provided on the pedal shaft 100. It is understood that the torque sensor 600 is arranged on the pedal shaft 100, and the torque sensor 600 includes a connection shaft sleeved on the pedal shaft 100 and a torque sensing member arranged on the connection shaft. The connection shaft is clamped on the outside of the pedal shaft 100, which can rotate synchronously with the pedal shaft 100. Further, the second unidirectional device 242 is arranged between the connection shaft and the output gear shaft 232.

By providing the torque sensor 600, the torque of the pedal shaft 100 can be detected, when the torque of the pedal shaft 100 exceeds a certain preset value in the manual trampling mode, the control module 500 starts the motor 400 to perform electric auxiliary drive on the pedal shaft 100, so as to make the user to trample easier.

Further, in the present embodiment, an angle sensing mechanism electrically connected to the control module 500 is provided between the interior of the casing 300 and the drive shaft 430 of the motor 400. In this arrangement, the control module 500 can obtain real-time speed information of the drive shaft 430 of the motor 400 and adjust the speed of the motor 400 according to the real-time torque of the pedal shaft 100.

It can be understood that due to the faster speed of each gear in the multi-stage transmission structure, in order to reduce the friction resistance and make the transmission more smooth, so as to reduce the vibration that the motor 400 auxiliary drives the pedal shaft 100; and the lubricating oil or grease is applied inside the casing 300 and between the gears in the multi-stage gear group 200.

At the same time, in order to prevent the lubricating oil or grease carried by each gear during high-speed rotation from sputtering into the side of the motor 400 mounted in the casing 300 and penetrating into the motor 400 and/or sputtering onto the control module 500, as shown in FIGS. 8 to 11, a baffle 800 for isolating the motor 400 from the multi-stage transmission structure is arranged between the multi-stage transmission structure and the motor 400, and the drive shaft 430 of the motor 400 is arranged passing through the baffle 800 and connected with the multi-stage transmission structure.

It is understood that the baffle 800 is detachably arranged inside the casing 300; and further, the baffle 800 can be configured in the following ways.

That is, as shown in FIGS.8 to 11, the baffle 800 can be arranged as a baffle assembly 810 that internally separates the casing 300 into two separate and mutually isolated sealing areas, the multi-stage drive structure is arranged on one side of the baffle assembly 810, and the motor 400 is arranged on the other side of the baffle assembly 810. More specifically, the baffle assembly 810 includes baffle discs 811 with a number in consistent with the number of gear groups, each baffle disc 811 is arranged on one side of the gear group, and the area of each baffle disc 811 is greater than the projected area of the largest gear on the gear group in which it is located. In this way, the lubricating oil or grease sputtered during the rotation of each gear group can be completely blocked by the baffle assembly 810, thus the sputtering of lubricating oil or grease on the other inner wall of the casing 300 or on the motor 400 is avoided.

Further, as shown in FIGS. 8, 10, and 11, in some embodiments, the baffle 800 is further provided with a support member 820 for assembling the angle sensing mechanism. Specifically, the support member 820 is arranged on and integrated with the baffle assembly 810; the angle sensing mechanism includes a magnetic steel body 720 arranged on the upper end of the drive shaft 430 of the motor 400 and a magnetic encoder 710 arranged on the support member 820.

It should be understood that the assembly steps of the power device are as following:
The motor 400 is first assembled on a separated casing, and then the baffle 800 is fixedly connected to the separated casing equipped with the motor 400, and then the multi-stage transmission structure is assembled on the separated casing, and finally the other separated casing is covered on the separated casing equipped with the motor 400, the baffle 800 and the multi-stage transmission structure, so as to complete the assembly of the power device.

As can be seen from the preceding assembly steps, by providing the magnetic encoder 710 on the support member 820 on the baffle 800, the relative position between the support member 820 and the drive shaft 430 of the motor 400 is determined after the baffle 800 and the casing 300 are fixedly connected, that is, the magnetic encoder 710 mounted on the support member 820 is capable of facing one end of the drive shaft 430 of the motor 400.

Compared with the setting method of providing the magnetic encoder 710 directly on the inner wall of the casing 300 in related technologies, it can be clearly understood whether the mounting position of the magnetic encoder 710 is correct during the assembly process of the magnetic encoder 710, which is conducive to improving assembly efficiency and making the angle detection of the angle sensing mechanism more accurate.

Further, as shown in FIGS. 8, 10 and 11, the support member 820 is an arc baffle arranged around the drive shaft 430, the axial height of the arc baffle is greater than or equal to the axial height of the gear engaged with the drive shaft 430. In this way, the arc baffle can completely block the lubricating oil or grease sputtered when engaged with the drive shaft 430 and the first gear 211, further preventing the motor 400 from being affected by the sputtered grease.

As shown in FIG. 7, in some embodiments a mounting cavity 310 is formed in the casing: 300 for receiving the motor 400, and the baffle 800 further includes a sealing cover 830 for isolating the motor 400 in the mounting cavity 310, and drive shaft 430 of the motor 400 is penetrated through the sealing cover 830.

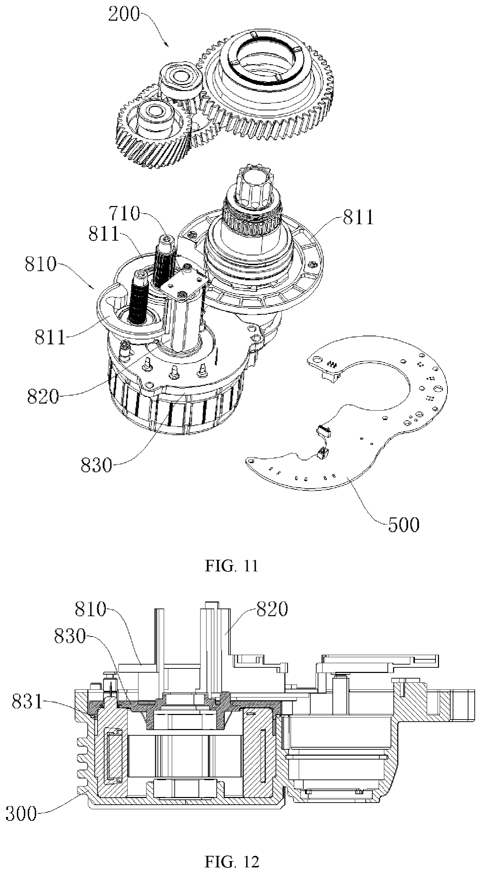

As shown in FIG. 12, specifically, an annular groove is provided at the opening of the mounting cavity 310, an annular flange 831 is provided on the side of the sealing cover 830 towards the mounting cavity 310, and an elastic sealing gasket is arranged between the annular flange 831 of the sealing cover 830 and the annular groove of the mounting cavity 310. Thus, the sealing cover 830 and the baffle assembly 810 are isolated between the motor 400 and the multi-stage drive structure, thereby protecting the motor 400 from effecting of the penetration of lubricating oil or grease.

Further, a seal is filled between one end surface of the motor 400 and the bottom of the mounting cavity 310, as well as between the other end surface of the motor 400 and the sealing cover 830. It is understood that the seal can be glue or epoxy resin, which is not limited herein.

In this way, the overall structural strength of the motor 400 can be further enhanced, so that the heat generated during the operation of the motor 400 can be better transferred to the casing 300 through the seal and distributed, thus improving the operation efficiency of the motor 400 and saving energy consumption. At the same time, the entire plastic sealing of the motor 400 is conducive to the winding harness to fix thereon. The winding shift is reduced when the motor 400 is operated, and the noise of the motor is reduced.

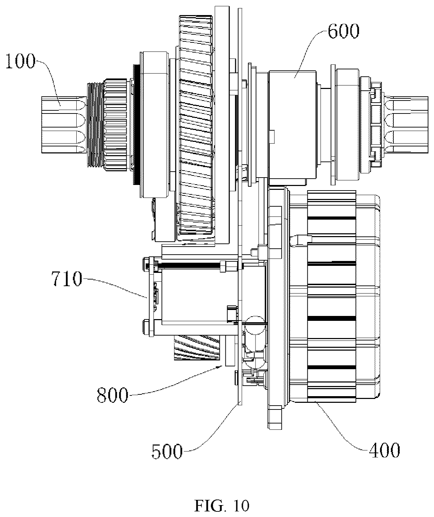

As shown in FIGS. 8 and 10, in some embodiments, the aforementioned control module 500 is arranged between the motor 400 and the multi-stage transmission structure, so that the lubricating oil or grease sputtered during the meshing rotation of the input gear group, the output gear group and the intermediate gear group at all levels will not splash onto the control module 500 due to the blocking of the baffle 800. It can not only keep the control module 500 dry and clean, but also avoid the short circuit of the control module 500.

Further, as shown in FIGS. 8 and 10, the electronic components on the control module 500 are arranged on the side of the control module 500 away from the multi-stage drive structure. In this way, even if the splash amount of lubricating oil or grease is large, it is only sputtered to the back of the control module 500, and will not stick to the electronic components of the control module 500, so that the electronic components can maintain a clean and tidy state to the maximum extent, which is conducive to reducing the failure rate of the control module 500.

In some embodiments, the motor 400 includes a rotor module 410 and a stator module 420, and the rotor module 410 is rotated in a rotating cavity of the stator module 420; and the stator module 420 includes a plurality of winding blocks 421 arranged around an array in a circumferential direction.

By providing the stator module 420 including a plurality of winding blocks 421 arranged around an array in the circumferential direction, when winding the stator module 420, each winding block 421 can be individually wound first, and then the winding block 421 can be arranged in an array in the circumferential direction to form a complete stator module 420.

Thus, when the winding block 421 is wound by a winding apparatus, the winding equipment has a large working space and can wind more enameled wires on the same winding block 421. Meanwhile, when the winding block 421 is arranged in an array in the circumferential direction, the gap between each winding block 421 can be arranged as small as possible, so as to improve the full slot rate of the stator module 420; and the power density and torque density of the motor 400 can be finally improved, under the same output power conditions, the volume of the motor 400 can be arranged smaller to further achieve the miniaturization of the motor 400.

In some embodiments, the gaps between each of side walls on both sides of an axis on the rotor module 410 and opposite inner walls of rotating cavity are uneven.

Specifically, it can be that the rotating cavity is not a circular rotating cavity, or it can be that the rotor module 410 is not a circular structure, or it can be that both the rotating cavity and the rotor module 410 are non-circular structures.

It can be understood that if the rotating cavity is an eccentric circular structure, then the curvature of the arc surface on a side of part of the winding block 421 towards the rotor module 410 is inconsistent, so that the rotating cavity formed by the enclosing of the winding blocks 421 is an eccentric circular structure.

By providing the gap between the rotor module 410 and the rotating cavity in such a way, and after the rotor module 410 is rotationally arranged in the rotating cavity of the stator module 420, the gaps between the side walls of the periphery of the rotor module 410 and the inner side wall of the rotating cavity of the stator module 420 are uneven. In this way, the uneven gap between the rotor module 410 and the stator module 420 can optimize the sine of the back potential of the motor 400 during the operation of the motor 400 to reduce the back potential harmonics of the motor 400, thereby the torque fluctuation during the operation of the motor 400 is reduced, so as to achieve the purpose of improving the smoothness of the operation of the motor 400.

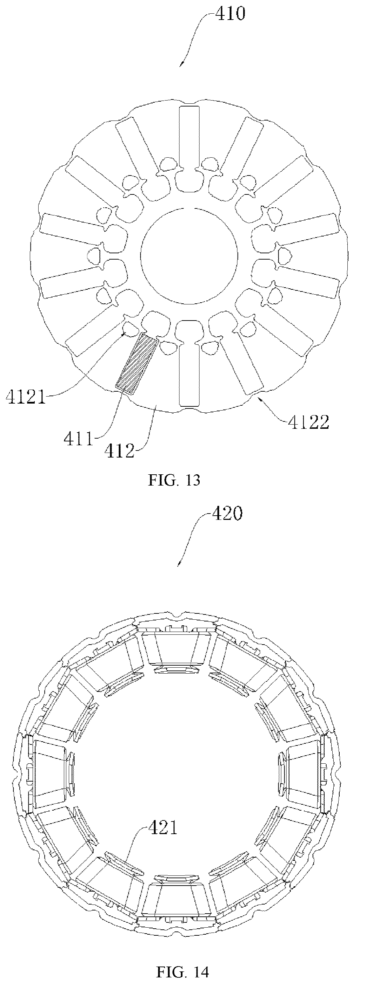

As shown in FIG. 13, in some embodiments, the magnetic steels 411 in the rotor module 410 are arranged in an array along the circumferential direction of the iron core 412, and the magnetic steels 411 are arranged along a radial direction. By providing the magnetic steels 411 along the radial direction, the polymer magnetic property of the rotor module 410 is better, which is conducive to providing a higher air gap flux inside the motor 400, thus the torque of the motor 400 can be increased, a high torque density of the motor 400 can be achieved, and the volume of the motor 400 can be reduced to achieve lightweight at the same torque.

Further, as shown in FIG. 13, in some embodiments, a hollow portion 4121 is arranged in the iron core 412 and located between adjacent two magnetic steels 411.

By providing the hollow portion 4121 between adjacent two magnetic steels 411, on the one hand, a magnetic insulation bridge can be formed between the side wall of the hollow portion 4121 and the magnetic steels 411, so as to reduce the magnetic leakage problem inside the rotor module 410 as much as possible. On the other hand, it can also reduce the weight of the rotor module 410 to reduce the overall weight of the motor 400.

Similarly, as shown in FIG. 13, in some embodiments, a groove 4122 extended along a height direction of the iron core 412 is formed on an outer circumferential surface of the iron core 412 and located at a same radial position as the magnetic steels 411. It can be understood that the function of the groove 4122 is consistent with that of the above-mentioned hollow portion 4121, that is, the thickness between the bottom of groove 4122 and the magnetic steel 411 is reduced to form the magnetic insulation bridge. In addition, it can maintain the structural strength of the iron core 412 while reducing weight, so as to avoid the structure damage of the iron core 412 under the action of strong centrifugal force at high speed.

In the embodiment of the third aspect of the present application, an electric bicycle is provided, which includes a vehicle body and a power device for each of the above-mentioned embodiments, a crank of the vehicle body is connected to the pedal shaft 100 in the power device, and a chainset of the vehicle body is fixed to the pedal shaft 100.

It can be understood that in the case that the power device has the above-mentioned advantages, the electric bicycle also has the above-mentioned advantages, which is not repeated herein.

The aforementioned embodiments are only preferred embodiments of the present application, and should not be regarded as being limitation to the present application. Any modification, equivalent replacement, improvement, and so on, which are made within the spirit and the principle of the present application, should be included in the protection scope of the present application.

## Claims

1. A multi-stage transmission structure, comprising:
a pedal shaft;
a multi-stage gear group, comprising an input gear group connected with a drive shaft of a motor, an output gear group connected with the pedal shaft, and an intermediate gear group arranged between the input gear group and the output gear group; wherein each of the input gear group, the output gear group and the intermediate gear group comprises a gear shaft and at least one gear arranged on the gear shaft; the gear shaft of the output gear group is sleeved on an outer side of the pedal shaft; a part of the input gear group, the output gear group and the intermediate gear group is provided with two gears spaced apart on the gear shaft along an axial direction of the gear shaft, and a plastic shaft sleeve is sleeved between the two gears and located on the gear shaft; and
a first unidirectional device and a second unidirectional device that are coaxially arranged, the second unidirectional device being connected between the gear shaft of the output gear group and the pedal shaft, the first unidirectional device being arranged between the gear shaft of the output gear group and the gear; wherein the first unidirectional device and the second unidirectional device are unidirectional bearings, and the first unidirectional device is an unidirectional wedge bearing;
wherein a relative rotation direction between the gear shaft and the gear on the output gear group is a first direction, a relative rotation direction between the gear shaft of the output gear group and the pedal shaft is a second direction, and the first direction is opposite to the second direction.

2. The multi-stage transmission structure according to claim 1, wherein in the part of the input gear group, the output gear group and the intermediate gear group, a part of the gears is a plastic gear; a metal connection member is arranged on the gear shaft, and the plastic gear engaged with the adjacent gear group is arranged an outer side of the metal connection member; wherein the metal connection member is integrally formed on the gear shaft.

3. The multi-stage transmission structure according to claim 1 or 2, wherein the gears engaged with the adjacent gear groups on each of the input gear group, the output gear group and the intermediate gear group are helical gears; wherein the multi-stage transmission structure further comprises a casing, the multi-stage gear group is arranged inside the casing, and the pedal shaft penetrates through two opposite sides of the casing; part of the gear shaft is rotationally arranged inside the casing through a bearing, the bearing arranged at an end of the gear shaft is abutted against an inner side wall of the casing, and an elastic member is provided between the bearing arranged at an other end of the gear shaft and an inner wall of the casing.

4. A power device, comprising the multi-stage transmission structure according to claim 3, a motor and a control module that are arranged inside a casing; wherein a torque sensor is arranged on a pedal shaft, and the torque sensor is electrically connected with the control module; an angle sensing mechanism is arranged between an interior of the casing and the drive shaft of the motor, and the angle sensing mechanism is electrically connected with the control module.

5. The power device according to claim 4, wherein a baffle is detachably arranged inside the casing and located between the motor and the multi-stage transmission structure; the baffle is provided with a support member, and the angle sensing mechanism comprises a magnetic steel body arranged on one end of the drive shaft and a magnetic encoder arranged on the support member and facing one end of the drive shaft; the support member is an arc baffle arranged around the drive shaft, and an axial height of the arc baffle is greater than or equal to an axial height of a gear engaged with the drive shaft.

6. The power device according to claim 4, wherein a mounting cavity is formed in the casing, and a sealing cover is arranged at an opening of the mounting cavity; the motor is arranged in the mounting cavity, and a seal is filled between an end surface of the motor and a bottom of the mounting cavity, as well as between an other end surface of the motor and the sealing cover.

7. The power device according to any one of claims 4 to 6, wherein the control module is arranged between the motor and the multi-stage transmission structure, and electronic components on the control module are arranged on a side of the control module away from the multi-stage transmission structure.

8. The power device according to claim 4, wherein the motor comprises a rotor module and a stator module, and the rotor module is rotationally arranged in a rotating cavity of the stator module; the stator module comprises a plurality of winding blocks arranged around an array in a circumferential direction; and gaps between each of side walls on both sides of an axis on the rotor module and opposite inner walls of rotating cavity are uneven.

9. The power device according to claim 8, wherein magnetic steels in the rotor module are arranged in an array along a circumference direction of an iron core, and the magnetic steels are arranged along a radial direction; a hollow portion is arranged in the iron core and located between adjacent two magnetic steels, to form a magnetic insulation bridge between the two magnetic steels; and a groove extended along a height direction of the iron core is formed on an outer circumferential surface of the iron core and located at a same radial position as the magnetic steels.

10. An electric bicycle, comprising: a vehicle body and the power device according to any one of claims 4 to 9; wherein a crank of the vehicle body is connected with the pedal shaft in the power device, and a chainset of the vehicle body is fixedly connected with the pedal shaft.
